# EUROPÄISCHE PATENTSCHRIFT

(11) **EP 1 777 264 B1**
(45) Veröffentlichungstag und Bekanntmachung des Hinweises auf die Patenterteilung: **09.07.2008**
(21) Anmeldenummer: 05022757.8
(22) Anmeldetag: 19.10.2005
(51) Int. Cl.: C08L 83/04

(54) **Herstellung und Verwendung von antimikrobiellen, polymerisierbaren Materialien in der Medizintechnik, insbesondere im Hörgeräteakustik-Bereich**
Production and use of antimicrobial polymerisable compositions useful in medical fields, in particluar in the area of hearing aid systems
Production et emploi des compositions polymerisables anti-micrbielles utilisables dans la technique médicale, en particulier dans le domaine de prothèses auditives

(43) Veröffentlichungstag der Anmeldung: 25.04.2007
(73) Patentinhaber: Dreve Otoplastik GmbH, 59423 Unna (DE)
(72) Erfinder: Veit, Thomas Dr., 48151 Münster (DE); Klarz, Martin Dr., 44137 Dortmund (DE); Kutschinski, Michael, 44579 Castrop-Rauxel (DE); Altmann, Reiner Dr., 44575 Castrop-Rauxel (DE)
(74) Vertreter: Köchling, Conrad-Joachim

(56) Entgegenhaltungen:
- FR-A- 2 707 660
- US-B1- 6 559 199

## Beschreibung

Die Erfindung betrifft die Herstellung und Verwendung von polymerisierbaren Materialien, insbesondere auf der Basis von Polyorganosiloxanen, die durch Zusatz eines oder mehrerer antimikrobieller Additive mit einer antimikrobiellen Wirkung versehen sind. Besonders betrifft die Erfindung Silikone, die im Hörgeräteakustik-Bereich Verwendung finden, beispielhaft genannt seien hier Silikone für Lärmschutz und Silikone für Schwimmschutz. Da diese Otoplastiken in der Regel lackiert werden, umfasst die Erfindung auch die Herstellung von antimikrobiellen Lacken zur Oberflächenbehandlung von Otoplastiken.

### Stand der Technik

Für die Herstellung von Lärm- und Schwimmschutz-Otoplastiken kommen zur Zeit sowohl indirekte als auch direkte Verfahren zum Einsatz. Da die Anforderungen an den Tragekomfort sehr hoch sind, ist die Formtreue und Passgenauigkeit der Silikon-Otoplastik von großer Bedeutung. Als besonders geeignet haben sich additionsvernetzende Silikone erwiesen, die im Gegensatz zu den kondensationsvernetzenden Silikonen nur einen geringen Schrumpf aufweisen und daher besonders dimensionsstabil sind. Jedoch sind auch kondensationsvernetzende Silikone brauchbar.

Kondensationsvernetzende Silikone bestehen nach dem Stand der Technik aus folgenden Komponenten als Basis-Masse (alle oder nur einige davon):
(1) Polyorganosiloxane mit zwei endständigen Hydroxyl-Gruppen im Molekül
(2) Polyorganosiloxane ohne reaktive Gruppen
(3) verstärkende Füllstoffe, mit beladener oder unbeladener Oberfläche
(4) nicht verstärkende Füllstoffe
(5) Öle und/oder andere Weichmacher
(6) weitere Additive und übliche Zusatz-, Hilfs- und Farbstoffe
(7) katalytisch wirkende Zusätze
(8) Inhibitoren

Bei den Verbindungen nach (1) handelt es sich um Polyorganosiloxane mit endständigen reaktiven Hydroxyl-Gruppen mit einer Viskosität bei 23° C von etwa 200 mPa s bis 400 000 mPa s, bevorzugt von 1000 mPa s bis 350 000 mPa s.

Zu den Verbindungen nach (2) gehören die Silikon-Öle, die wie die Verbindungen nach (1) Polyorganosiloxane sind, aber für die Kondensationsvernetzungsreaktion unreaktive Gruppen enthalten, derartige Verbindungen sind z.B. in W. Noll " Chemie und Technologie der Silikone", Verlag Chemie Weinheim, 1968 beschrieben.

Verstärkende Füllstoffe nach (3) haben in der Regel eine BET-Oberfläche von mehr als 50 m²/g. Hierzu gehören z.B. pyrogene oder gefällte Kieselsäuren und Siliciumaluminiummischoxide. Diese Füllstoffe sind aufgrund ihrer hydrophilen Oberfläche besonders für die Verwendung zusammen mit Hydroxyl-Polyorganosiloxanen geeignet, sie können aber auch durch Oberflächenbehandlung mit z.B. Hexamethyldisilazan oder Organosiloxanen bzw. Organosilanen hydrophobiert sein.

Die nicht verstärkenden Füllstoffe nach (4) haben eine BET-Oberfläche von bis zu 50 m²/g, hierzu gehören die Quarze, Cristobalite, Diatomeenerden, Kieselgure, Calciumcarbonate, Talkum, Zeolithe, Natriumaluminiumsilikate, Metalloxid- und Glaspulver. Auch diese Füllstoffe können gleichermaßen wie die verstärkenden Füllstoffe durch Oberflächenbehandlung hydrophobiert sein.

Als Verbindungen nach (5) kommen beispielsweise Kohlenwasserstoffe in Frage, besonders bevorzugt sind Paraffin-Öle.

Weiterhin können als Additive Farbpigmente und weitere Hilfsmittel enthalten sein. Zur Steuerung der Reaktivität kann es notwendig sein, katalytisch wirkende Zusätze (7), in der Regel Wasser oder organische Säuren wie z.B. Benzoesäure, oder Inhibitoren (8), beispielsweise sehr kurzkettige, endgestoppte Hydroxyl-Siloxane, einzusetzen.

Durch Vermischen der Basis-Masse mit einer Härterpaste als zweiter Komponente wird die Kondensationsreaktion gestartet. Der Anteil Härterpaste in der Mischung kann von 1 Gewichtsprozent bis 10 Gewichtsprozent bezogen auf die Basis-Masse variieren, bevorzugt sind aber 2 Gewichtsprozent bis 5 Gewichtsprozent.

Eine Härterpaste nach dem Stand der Technik besteht aus folgenden Komponenten:
(1) Katalysator für die Kondensationsvernetzung, in der Regel eine Organozinn-Verbindung wie z.B. Dibutylzinndilaurat oder Dibutylzinnoxid.
(2) hydrolysierbare Reaktanden, in der Regel Kieselsäureester, wie z.B. Vinyltriethoxysilan oder Tetraethylsilikat.
(3) eine Trägermasse, in der Regel Mineralöl-Produkte wie z.B. Vaseline.
(4) weitere Additive und übliche Zusatz-, Hilfs- und Farbstoffe.

Das Vermischen der Basis-Masse ist auch mit einer Härter-Flüssigkeit möglich. Diese besteht nur aus den Komponenten (1) und (2) und gegebenenfalls (4), wird also ohne Trägermasse hergestellt und ist daher dünnflüssig.

Additionsvernetzende Silikone bestehen nach dem Stand der Technik aus folgenden Komponenten (alle oder nur einige davon) :
(1) Polyorganosiloxane mit mindestens zwei ungesättigten Gruppen im Molekül
(2) Polyorganohydrogensiloxane mit mindestens zwei SiH-Gruppen im Molekül
(3) Polyorganosiloxane ohne reaktive Gruppen
(4) Edelmetall-Katalysator
(5) verstärkende Füllstoffe, mit beladener oder unbeladener Oberfläche
(6) nichtverstärkende Füllstoffe
(7) Öle oder andere Weichmacher
(8) weitere Additive und übliche Zusatz-, Hilfs- und Farbstoffe
(9) Inhibitoren

Bei den Verbindungen nach (1) handelt es sich um Polyorganosiloxane mit endständigen und/oder seitenständigen reaktiven Gruppen mit einer Viskosität bei 23° C von etwa 50 mPa s bis 165 000 mPa s, bevorzugt von 200 mPa s bis 65 000 mPa s.

Die Verbindungen nach (2) enthalten reaktive SiH-Gruppen, die in einer Additionsreaktion unter Edelmetall-Katalyse mit den Verbindungen (1) das Polymer aufbauen.

Zu den Verbindungen nach (3) gehören die Silikon-Öle, die wie die Verbindungen nach (1) Polyorganosiloxane sind, aber für die edelmetallkatalysierte Additionsvernetzungsreaktion unreaktive Gruppen enthalten, derartige Verbindungen sind z.B. in W. Noll "Chemie und Technologie der Silikone", Verlag Chemie Weinheim, 1968 beschrieben.

Der Edelmetallkatalysator (4) ist bevorzugt ein Platin-Komplex, besonders gut geeignet sind Platin-Siloxan-Komplexe, wie sie bereits in US-A-3 715 334, US-A-3 775 352 und US-A-3 814 730 beschrieben sind.

Verstärkende Füllstoffe nach (5) haben in der Regel eine BET-Oberfläche von mehr als 50 m²/g. Hierzu gehören z.B. pyrogene oder gefällte Kieselsäuren und Siliciumaluminiummischoxide. Die genannten Füllstoffe können durch Oberflächenbehandlung mit z.B. Hexamethyldisilazan oder Organosiloxanen bzw. Organosilanen hydrophobiert sein.

Die nicht verstärkenden Füllstoffe nach (6) haben eine BET-Oberfläche von bis zu 50 m²/g, hierzu gehören die Quarze, Cristobalite, Diatomeenerden, Kieselgure, Calciumcarbonate, Talkum, Zeolithe, Natriumaluminiumsilikate, Metalloxid- und Glaspulver. Auch diese Füllstoffe können gleichermaßen wie die verstärkenden Füllstoffe durch Oberflächenbehandlung hydrophobiert sein.

Als Verbindungen nach (7) kommen beispielsweise Kohlenwasserstoffe in Frage, besonders bevorzugt sind Paraffin-Öle.

Weiterhin können als Additive Farbpigmente und weiter Hilfsmittel wie z.B. feinverteiltes Platin oder Palladium als Wasserstoff-Absorber enthalten sein.
Zur Steuerung der Reaktivität kann es notwendig sein, Inhibitoren (9) einzusetzen. Solche Inhibitoren sind bekannt und z.B. in US-A-3 933 880 beschrieben. In der Regel handelt es sich hier um acetylenisch ungesättigte Alkohole oder vinylgruppenhaltige Poly-, Oligo- und Disiloxane.

Die Massen werden bevorzugt in zwei Komponenten formuliert, um Lagerstabilität zu gewährleisten. Der gesamte Gehalt an Edelmetall-Katalysator (4) ist in der Katalysator-Komponente, der gesamte Gehalt an SiH-Verbindung (2) ist in der zweiten, räumlich von der ersten Komponente getrennten Komponente, der Basis-Komponente unterzubringen. Durch Vermischen der beiden Komponenten härten die Massen in einer als Hydrosilylierung bekannten Additionsreaktion aus.

Die Volumenverhältnisse der beiden Komponenten können 10:1 bis 1:10 betragen. Besonders bevorzugt sind Volumen-Mischverhältnisse von 1:1, 4:1 und 5:1 (Basis- zu Katalysator-Komponente). Für den Lack gelten die Volumen-Mischverhältnisse von 40:1 bis 1:40 (Basis- zu Katalysator-Komponente).

Silikon-Otoplastiken werden teilweise nach dem Stand der Technik mit einem Lack als Oberflächen-Finish lackiert. Ein solcher Lack hat die folgende Zusammensetzung:
(1) Polyorganosiloxane mit mindestens zwei ungesättigten Gruppen im Molekül
(2) Polyorganohydrogensiloxane mit mindestens zwei SiH-Gruppen im Molekül
(3) Polyorganosiloxane ohne reaktive Gruppen
(4) Edelmetall-Katalysator
(5) verstärkende Füllstoffe, mit beladener oder unbeladener Oberfläche
(6) Inhibitoren
(7) organisches Lösungsmittel

Für die Verbindungen (1) bis (6) gilt das oben gesagte. Auch dieser Lack ist ein Zwei-Komponenten-Material und die gemachten Anmerkungen gelten hier ebenso. Die organischen Lösungsmittel, die erfindungsgemäß Verwendung finden, haben einen Siedepunkt bei 1013 hPa im Bereich von 40°-200° C, bevorzugt im Bereich von 70°-150° C, besonders bevorzugt im Bereich von 100°-140° C. In Frage kommen cyclische und aliphatische Kohlenwasserstoffe wie z.B. Cyclohexan, n-Hexan, n-Heptan, Toluol und Benzine. Die Silikon-Otoplastiken werden in den Lack eingetaucht und der Lack wird im Ofen bei Temperaturen von 140°-200° C ausgehärtet. Die Otoplastik hat nach dieser Behandlung eine glatte, glänzende Oberfläche.

Silikon-Otoplastiken als Lärm- oder Schwimmschutz werden in der Regel über einen längeren Zeitraum im Ohr getragen. Es ist daher in besonderer Weise auf Hygiene zu achten. Der Einsatz von Silikonen im Bereich von Lärm- und Schwimmschutz-Otoplastiken ist bekannt, denn die Silikone bieten ein breites Spektrum an mechanischen und physikalischen Eigenschaften an und haben den weiteren Vorteil, dass sie keine oder nur geringe toxischen, sensibilisierenden oder allergenen Potentiale besitzen. Dies macht sie für medizinische Anwendungen sehr gut geeignet. Die Passgenauigkeit von Otoplastiken spielt dabei eine besondere Rolle. Die Otoplastik steht in unmittelbarem Kontakt zur Haut des Ohres. Das feuchte und warme Milieu im Gehörgang bietet geradezu ideale Voraussetzungen für das Wachstum von Mikroorganismen (Bakterien, Viren, Pilze, Algen), von denen bekannt ist, dass sie sich auf Silikonen ansiedeln können. Dies beeinträchtigt nicht nur die Hygiene sondern auch die Ästhetik von Otoplastiken, die von Menschen zum Zweck des Lärm-Schutzes z.B. bei der Ausübung ihres Berufes oder als Schwimm-Schutz beim Schwimmsport über einen längeren Zeitraum im Ohr getragen werden. Insbesondere kann es zu Entzündungen kommen, wenn durch Druckstellen (wegen ungenügender Passgenauigkeit der Otoplastik) oder Reibung durch Kaubewegungen die Haut des Gehörganges gereizt wird.
Eine antimikrobielle Einstellung der Silikon-Materialien ohne Beeinträchtigung der oben genauer beschriebenen Polymerisationsreaktion ist daher wünschenswert.

Aus der US 6 559 199 B1 ist der Einsatz antimikrobieller Additive insbesondere in Form von Bactericiden bekannt. Der Schutz von Gegenständen und Oberflächen gegen Mikroorganismen ist seit vielen Jahren bekannt. Beispielsweise ist die antimikrobielle Wirkung von Silber- oder Kupferoberflächen seit Jahrhunderten bekannt, ohne genaue Kenntnisse über den Mechanismus zu haben. Im Hörgeräteakustik-Bereich bietet die Fa. Audio Service unter dem Namen ComforMed eine auf der bakteriziden und fungiziden Wirkung von Silber basierende kommerzielle Lösung zur Beschichtung von Otoplastiken an.

Die Einführung von antimikrobiellen Zusätzen ist auch aus dem Bereich der dentalen Abformmassen bekannt.
So wird in EP 0 361 301 der Einbau von in Wasser gelösten quartären Ammonium-Salzen in Alginaten beschrieben.
In WO 00/07546 wird ein Silikon-Material zum Zweck der dentalen Abformung beschrieben, das durch Einarbeitung von N-Chloraminen und ähnlichen Verbindungen antimikrobiell eingestellt ist.

Aus der EP-A-0 493 186 ist der Einsatz von Biguaniden in additionsvernetzende Silikone bekannt.
In kondensationsvernetzenden Silikonen ist die Verwendung von Calciumhypochlorit beispielsweise in FR 2 707 660 dokumentiert. Hier beruht die Wirkung auf aktivem Chlor.

Alle genannten und veröffentlichten Additive mit antimikrobieller Wirkung erfüllen aber nicht die hohen Anforderungen, die an polymerisierbare Materialien zu stellen sind, die wie z.B. Lärm- und Schwimmschutz-Otoplastiken über einen längeren Zeitraum im Ohr getragen werden:
- das antimikrobielle Additiv darf nicht toxisch sein undkein sensibilisierendes oder allergenes Potential besitzen.
- das antimikrobielle Additiv sollte in genügend großer Menge in der polymerisierbaren Masse enthalten sein, um seine Wirkung an der Kontaktfläche ausüben zu können.
- das antimikrobielle Additiv darf die Polymerisationsreaktion nicht inhibieren und die typischen Eigenschaften des Polymerisats nicht verändern.

Das Ziel der Erfindung ist es daher, ein Material für Otoplastiken, vor allem für Lärm- und Schwimmschutz, bereitzustellen, das antimikrobiell eingestellt ist, ohne die erwähnten negativen Eigenschaften aufzuweisen.
Dieses Ziel wird durch die Verwendung eines oder mehrerer antimikrobieller Additive zu den oben beschriebenen Komponenten erreicht.

Ziel dieser Erfindung ist es zusätzlich, auch einen antimikrobiellen Lack auf Silikon-Basis bereitzustellen. Dieses Ziel wird in gleicher Weise durch die Verwendung eines oder mehrerer antimikrobieller Additive zum Lack erreicht. Die Erfindung löst die Aufgabe durch die in den Patentansprüchen angegebene Verwendung.

Überraschenderweise hat sich herausgestellt, dass sich polymerisierbare Massen, insbesondere auf der Basis von Polyorganosiloxanen, durch Zusatz eines oder mehrerer antimikrobieller Zusätze antimikrobiell einstellen lassen und dabei die wesentlichen Eigenschaften der Massen durch den Zusatz unbeeinflusst bleiben:
- unveränderte Lagerstabilität
- unveränderte Verarbeitungszeiten und Aushärtezeiten
- unveränderte Härte
- unveränderte Viskositäten der Komponenten
- unveränderte Bearbeitbarkeit

Die Oberflächenbeschaffenheit der ausgehärteten Elastomere verbessert sich sogar deutlich, wodurch eine optimierte Passgenauigkeit erreicht wird. Auch die Homogenität der Mischung der Komponenten wird verbessert.

Bei den antimikrobiellen Additiven handelt es sich zum einen um Silber-Nanopartikel (Partikelgröße < 30 nm), wie sie beispielsweise von der Fa. CIBA und der Fa. AgPure im Handel erhältlich sind. Des Weiteren können in Anwesenheit von Feuchtigkeit antimikrobiell wirkende Glasfüller (Partikelgröße < 100 nm) eingesetzt werden, die z.B. von der Fa. SCHOTT vertrieben werden.

Diese setzen sich wie folgt zusammen:
45 ± 5 Gew. % SiO₂
25 ± 5 Gew. % Na₂O
25 ± 5 Gew. % CaO
5 ± 5 Gew. % P₂O₅

Die vielfältigen Wirkungsweisen der bakteriostatischen Effekte der beschriebenen Additive sind dem Fachmann bekannt und können in der einschlägigen Literatur nachverfolgt werden. Von Bedeutung sind insbesondere die Steuerung des pH-Wertes, die Veränderung des osmotischen Druckes an der Zellmembran, der Kaliumionenaustausch und irreversible Reaktionen mit thiohaltigen Proteinen.

Die folgenden Ausführungsbeispiele dienen der genaueren Beschreibung der Erfindung, sie sind sehr detailliert und sollen die Erfindung in keiner Weise einschränken.

### Beispiel 1: transluzentes Silikon-Material (Vergleichsbeispiel)

### Katalysator-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,8 Gew. % vinylendgestopptes Polydimethylsiloxan mit einer Viskosität von 10000 mPa s
50,4 Gew. %vinylendgestopptes Polydimethylsiloxan mit einer Viskosität von 65000 mPa s
8,9 Gew. % eines Polydimethylsiloxan-Öls mit einer Viskosität von 50 mPa s
12,0 Gew. % eines Paraffin-Öls
21,7 Gew. % einer pyrogenen Kieselsäure (oberflächenbehandelt) mit einer BET-Oberfläche zwischen 150 m²/g und 200 m²/g
0,4 Gew. % eines Platin-Katalysators
werden vorgelegt und 30 Minuten lang homogen gemischt. Die Mischung wird anschließend 15 Minuten lang im Vakuum entgast.

### Basis-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,9 Gew. % vinylendgestopptes Polydimethylsiloxan mit einer Viskosität von 10000 mPa s
49,6 Gew. %vinylendgestopptes Polydimethylsiloxan mit einer Viskosität von 65000 mPa s
3,1 Gew. % eines Polydimethylsiloxan-Öls mit einer Viskosität von 50 mPa s
7,6 Gew. % eines Paraffin-Öls
21,2 Gew. % einer pyrogenen Kieselsäure (oberflächenbehandelt) mit einer BET-Oberfläche zwischen 150 m²/g und 200 m²/g
11,8 Gew. % eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt.
Man erhält einen ausgehärteten Probekörper mit einer Endhärte von 40 Shore A und hervorragenden mechanischen Eigenschaften (Reißfestigkeit, Reißdehnung).

### Beispiel 2: opakes Silikon-Material (Vergleichsbeispiel)

### Katalysator-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,8 Gew. % vinylendgestopptes Polydimethylsiloxan mit einer Viskosität von 10000 mPa s
50,1 Gew. %vinylendgestopptes Polydimethylsiloxan mit einer Viskosität von 65000 mPa s
8,9 Gew. % eines Polydimethylsiloxan-Öls mit einer Viskosität von 50 mPa s
12,0 Gew. % eines Paraffin-Öls
21,7 Gew. % einer pyrogenen Kieselsäure (oberflächenbehandelt) mit einer BET-Oberfläche zwischen 150 m²/g und 200 m²/g
0,3 Gew. % Weißpigment (Titandioxid)
0,4 Gew. % eines Platin-Katalysators
werden vorgelegt und 30 Minuten lang homogen gemischt. Die Mischung wird anschließend 15 Minuten lang im Vakuum entgast.

### Basis-Komponente

1,8 Gew. % vinylendgestopptes Polydimethylsiloxan mit einer Viskosität von 200 mPa s
1,8 Gew. % vinylendgestopptes Polydimethylsiloxan mit einer Viskosität von 1000 mPa s
2,8 Gew. % vinylendgestopptes Polydimethylsiloxan mit einer Viskosität von 10000 mPa s
48,1 Gew. %vinylendgestopptes Polydimethylsiloxan mit einer Viskosität von 65000 mPa s
3,1 Gew. % eines Polydimethylsiloxan-Öls mit einer Viskosität von 50 mPa s
7,6 Gew. % eines Paraffin-Öls
21,2 Gew. % einer pyrogenen Kieselsäure (oberflächenbehandelt) mit einer BET-Oberfläche zwischen 150 m²/g und 200 m²/g
1,5 Gew. % eines blauen Farbstoffes
12,1 Gew. % eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt.
Man erhält einen ausgehärteten blauen, opaken Probekörper mit einer Endhärte von 40 Shore A und hervorragenden mechanischen Eigenschaften (Reißfestigkeit, Reißdehnung).

### Beispiel 3: transluzentes Silikon-Material mit antimikrobiellen Eigenschaften (erfindungsgemäß)

### Katalysator-Komponente

1,7 Gew. % vinylendgestopptes Polydimethylsiloxan mit einer Viskosität von 200 mPa s
1,7 Gew. % vinylendgestopptes Polydimethylsiloxan mit einer Viskosität von 1000 mPa s
2,6 Gew. % vinylendgestopptes Polydimethylsiloxan mit einer Viskosität von 10000 mPa s
49,4 Gew. %vinylendgestopptes Polydimethylsiloxan mit einer Viskosität von 65000 mPa s
8,7 Gew. % eines Polydimethylsiloxan-Öls mit einer Viskosität von 50 mPa s
12,0 Gew. % eines Paraffin-Öls
21,5 Gew. % einer pyrogenen Kieselsäure (oberflächenbehandelt) mit einer BET-Oberfläche zwischen 150 m²/g und 200 m²/g
0,4 Gew. % eines Platin-Katalysators
   und
2,0 Gew. % bioaktiver Glasfüller, bestehend aus 45 ± 5 Gew. % SiO₂, 25 ± 5 Gew. % Na₂O, 25 ± 5 Gew. % CaO und 5 ± 5 Gew. % P₂O₅
werden vorgelegt und 30 Minuten lang homogen gemischt. Die Mischung wird anschließend 15 Minuten lang im Vakuum entgast.

### Basis-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,9 Gew. % vinylendgestopptes Polydimethylsiloxan mit einer Viskosität von 10000 mPa s
49,6 Gew. %vinylendgestopptes Polydimethylsiloxan mit einer Viskosität von 65000 mPa s
3,1 Gew. % eines Polydimethylsiloxan-Öls mit einer Viskosität von 50 mPa s
7,6 Gew. % eines Paraffin-Öls
21,2 Gew. % einer pyrogenen Kieselsäure (oberflächenbehandelt) mit einer BET-Oberfläche zwischen 150 m²/g und 200 m²/g
11,8 Gew. % eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt.

Man erhält einen ausgehärteten Probekörper mit einer Endhärte von 40 Shore A und hervorragenden mechanischen Eigenschaften (Reißfestigkeit, Reißdehnung).
Die Oberfläche des Probekörpers ist sehr glatt und wirkt sehr homogen.

### Beispiel 4: opakes Silikon-Material mit antimikrobiellen Eigenschaften (erfindungsgemäß)

### Katalysator-Komponente

1,8 Gew. % vinylendgestopptes Polydimethylsiloxan mit einer Viskosität von 200 mPa s
1,8 Gew. % vinylendgestopptes Polydimethylsiloxan mit einer Viskosität von 1000 mPa s
2,8 Gew. % vinylendgestopptes Polydimethylsiloxan mit einer Viskosität von 10000 mPa s
50,0 Gew. %vinylendgestopptes Polydimethylsiloxan mit einer Viskosität von 65000 mPa s
8,9 Gew. % eines Polydimethylsiloxan-Öls mit einer Viskosität von 50 mPa s
12,0 Gew. % eines Paraffin-Öls
21,7 Gew. % einer pyrogenen Kieselsäure (oberflächenbehandelt) mit einer BET-Oberfläche zwischen 150 m²/g und 200 m²/g
0,3 Gew. % Weißpigment (Titandioxid)
0,4 Gew. % eines Platin-Katalysators
   und
0,3 Gew. % Silber Nano-Partikel (Partikelgröße < 100 nm)
werden vorgelegt und 30 Minuten lang homogen gemischt. Die Mischung wird anschließend 15 Minuten lang im Vakuum entgast.

### Basis-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,9 Gew. % vinylendgestopptes Polydimethylsiloxan mit einer Viskosität von 10000 mPa s
48,1 Gew. %vinylendgestopptes Polydimethylsiloxan mit einer Viskosität von 65000 mPa s
3,1 Gew. % eines Polydimethylsiloxan-Öls mit einer Viskosität von 50 mPa s
7,6 Gew. % eines Paraffin-Öls
21,2 Gew. % einer pyrogenen Kieselsäure (oberflächenbehandelt) mit einer BET-Oberfläche zwischen 150 m²/g und 200 m²/g
1,5 Gew. % eines blauen Farbstoffes
11,8 Gew. % eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt.
Man erhält einen ausgehärteten blauen, opaken Probekörper mit einer Endhärte von 40 Shore A und hervorragenden mechanischen Eigenschaften (Reißfestigkeit, Reißdehnung).

### Beispiel 5: opakes Silikon-Material mit antimikrobiellen Eigenschaften (erfindungsgemäß)

### Katalysator-Komponente

1,6 Gew. % vinylendgestopptes Polydimethylsiloxan mit einer Viskosität von 200 mPa s
1,6 Gew. % vinylendgestopptes Polydimethylsiloxan mit einer Viskosität von 1000 mPa s
2,6 Gew. % vinylendgestopptes Polydimethylsiloxan mit einer Viskosität von 10000 mPa s
49,3 Gew. %vinylendgestopptes Polydimethylsiloxan mit einer Viskosität von 65000 mPa s
8,7 Gew. % eines Polydimethylsiloxan-Öls mit einer Viskosität von 50 mPa s
12,0 Gew. % eines Paraffin-Öls
21,5 Gew. % einer pyrogenen Kieselsäure (oberflächenbehandelt) mit einer BET-Oberfläche zwischen 150 m²/g und 200 m²/g
0,4 Gew. % eines Platin-Katalysators
   und
2,0 Gew. % bioaktiver Glasfüller, bestehend aus 45 ± 5 Gew. % SiO₂, 25 ± 5 Gew. % Na₂O, 25 ± 5 Gew. % CaO und 5 ± 5 Gew. % P₂O₅
   und
0,3 Gew. % Silber Nano-Partikel (Partikelgröße < 100 nm)
werden vorgelegt und 30 Minuten lang homogen gemischt. Die Mischung wird anschließend 15 Minuten lang im Vakuum entgast.

### Basis-Komponente

1,9 Gew. % vinylendgestopptes Polydimethylsiloxan mit einer Viskosität von 200 mPa s
1,9 Gew. % vinylendgestopptes Polydimethylsiloxan mit einer Viskosität von 1000 mPa s
2,9 Gew. % vinylendgestopptes Polydimethylsiloxan mit einer Viskosität von 10000 mPa s
48,1 Gew. %vinylendgestopptes Polydimethylsiloxan mit einer Viskosität von 65000 mPa s
3,1 Gew. % eines Polydimethylsiloxan-Öls mit einer Viskosität von 50 mPa s
7,6 Gew. % eines Paraffin-Öls
21,2 Gew. % einer pyrogenen Kieselsäure (oberflächenbehandelt) mit einer BET-Oberfläche zwischen 150 m²/g und 200 m²/g
1,5 Gew. % eines blauen Farbstoffes
11,8 Gew. % eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt.
Man erhält einen ausgehärteten, blauen und opaken Probekörper mit einer Endhärte von 40 Shore A und hervorragenden mechanischen Eigenschaften (Reißfestigkeit, Reißdehnung).

Die Oberfläche des Probekörpers ist sehr glatt und wirkt sehr homogen.

### Beispiel 6: additionsvernetzender Silikon-Lack mit antimikrobiellen Eigenschaften (erfindungsgemäß)

### Katalysator-Komponente

9,0 Gew. % vinylendgestopptes Polydimethylsiloxan mit einer Viskosität von 10000 mPa s
9,0 Gew. %vinylendgestopptes Polydimethylsiloxan mit einer Viskosität von 65000 mPa s
7,5 Gew. % einer pyrogenen Kieselsäure (oberflächenbehandelt) mit einer BET-Oberfläche zwischen 100 m²/g und 200 m²/g
72,3 Gew. % organisches Lösungsmittel
0,2 Gew. % Inhibitor
   und
2,0 Gew. % bioaktiver Glasfüller, bestehend aus 45 ± 5 Gew. % SiO₂, 25 ± 5 Gew. % Na₂O, 25 ± 5 Gew. % CaO und 5 ± 5 Gew. % P₂O₅

### Basis-Komponente

100,0 Gew. % eines Polymethylhydrogensiloxans mit einem SiH-Gehalt von 3 mmol/g

### Mischung von Katalysator- und Basiskomponente

Die beiden Lack-Komponenten werden im Volumen-Verhältnis 1:33 (Basis zu Katalysator) gemischt. Die Oberfläche einer mit diesem Lack lackierten Otoplastik ist hochglänzend.

## Patentansprüche

1. Ein zweikomponentiges, additionsvernetzendes Silikon, bestehend aus
(1) 0,1 - 70 Gew. % Polyorganosiloxanen mit mindestens zwei ungesättigten Gruppen im Molekül,
(2) 0,1 - 15 Gew. %Polyorganohydrogensiloxanen mit mindestens zwei SiH-Gruppen im Molekül,
(3) 0 - 10 Gew. % Polyorganosiloxanen ohne reaktive Gruppen,
(4) 0,01 - 2.0 Gew. % Edelmetall-Katalysator,
(5) 0 - 30 Gew. % verstärkenden Füllstoffen, mit beladener oder unbeladener Oberfläche,
(6) 0 - 20 Gew. % nichtverstärkenden Füllstoffen,
(7) 0 - 30 Gew. %Ölen oder anderen Weichmachern,
(8) 0 - 10 Gew. %weiteren Additiven und üblichen Zusatz-, Hilfs- und Farbstoffen,
(9) 0 - 1 Gew. % Inhibitoren, und
(10) 0,1 - 5 Gew. % eines antimikrobiellen Additivs oder einer Kombination aus mindestens zwei antimikrobiellen Additiven,
**dadurch gekennzeichnet, dass** es sich bei den antimikrobiellen Additiven um Silber Nano-Partikel oder bioaktive Glasfüller der Zusammensetzung 45 ± 5 Gew. % SiO₂, 25 ± 5 Gew. % Na₂O, 25 ± 5 Gew. % CaO und 5 ± 5 Gew. % P₂O₅ oder um Kombinationen aus beiden antimikrobiellen Additiven handelt.

2. Ein kondensationsvernetzendes Silikon, bestehend aus einer Basis-Komponente aus
(1) Polyorganosiloxanen mit zwei endständigen Hydroxyl-Gruppen im Molekül,
(2) Polyorganosiloxanen ohne reaktive Gruppen,
(3) verstärkenden Füllstoffen, mit beladener oder unbeladener Oberfläche,
(4) nicht verstärkende Füllstoffen,
(5) Ölen und/oder anderen Weichmachern,
(6) weiteren Additiven und üblichen Zusatz-, Hilfs- und Farbstoffen,
(7) katalytisch wirkenden Zusätzen,
(8) Inhibitoren
und
(9) einem antimikrobiellen Additiv oder einer Kombination aus mindestens zwei antimikrobiellen Additiven
und einer Härter-Komponente aus
(1) Katalysator für die Kondensationsvernetzung,
(2) Hydrolysierbaren Reaktanden,
(3) einer Trägermasse,
(4) weiteren Additiven und üblichen Zusatz-, Hilfs- und Farbstoffen, wobei es sich bei den antimikrobiellen Additiven um Silber Nano-Partikel oder bioaktive Glasfüller der Zusammensetzung 45 ± 5 Gew. % SiO₂, 25 ± 5 Gew. % Na₂O, 25 ± 5 Gew. % CaO und 5 ± 5 Gew. % P₂O₅ oder um Kombinationen aus beiden antimikrobiellen Additiven handelt.

3. Silikon nach Anspruch 2,
**dadurch gekennzeichnet, dass** der Katalysator für die Kondensationsvernetzung eine Organozinn-Verbindung ist.

4. Silikon nach Anspruch 3,
**dadurch gekennzeichnet, dass** die Organozinn-Verbindung ein Dibutylzinndilanrat oder ein Dibutylzinnoxid ist.

5. Silikon nach einem der Ansprüche 2 bis 4,
**dadurch gekennzeichnet, dass** die hydrolisierbaren Reaktanden Kieselsäureester sind.

6. Silikon nach Anspruch 5,
**dadurch gekennzeichnet, dass** der Kieselsäureester ein Vinyltriethoxysilan oder ein Tetraethylsilikat ist.

7. Silikon nach einem der Ansprüche 2 bis 6,
**dadurch gekennzeichnet, dass** die Trägermasse ein Mineralöl-Produkt ist.

8. Silikon nach Anspruch 7,
**dadurch gekennzeichnet, dass** das Mineralöl-Produkt Vaseline ist.

9. Silikon-Lack zum Oberflächen-Finish von Otoplastiken aus Silikon, bestehend aus:
(1) Polyorganosiloxanen mit mindestens zwei ungesättigten Gruppen im Molekül,
(2) Polyorganohydrogensiloxanen mit mindestens zwei SiH-Gruppen im Molekül,
(3) Polyorganosiloxanen ohne reaktive Gruppen,
(4) Edelmetall-Katalysator,
(5) verstärkenden Füllstoffen, mit beladener oder unbeladener Oberfläche,
(6) Inhibitoren,
(7) organischem Lösungsmittel
und
(8) einem antimikrobiellen Additiv oder einer Kombination aus mindestens zwei antimikrobiellen Additiven, wobei es sich bei den antimikrobiellen Additiven um Silber Nano-Partikel oder bioaktive Glasfüller der Zusammensetzung 45 ± 5 Gew. % SiO₂, 25 ± 5 Gew. % Na₂O, 25 ± 5 Gew. % CaO und 5 ± 5 Gew. % P₂O₅ oder um Kombinationen aus beiden antimikrobiellen Additiven handelt.

## Claims

1. A two-component addition-crosslinking silicone comprising
(1) 0.1 - 70% by weight polyorganosiloxanes containing at least two unsaturated groups in the molecule;
(2) 0.1 - 15 % by weight polyorganohydrogensiloxanes containing at least two SiH groups in the molecule;
(3) 0 - 10 % by weight polyorganosiloxanes containing no reactive groups;
(4) 0.01 - 2.0 % by weight noble metal catalyst;
(5) 0 - 30 % by weight reinforcing fillers having a charged or uncharged surface;
(6) 0 - 20 % by weight non-reinforcing fillers;
(7) 0 - 30 % by weight oils or other softeners;
(8) 0 - 10 % by weight other additives and customary addition agents, adjuvants and dyes;
(9) 0 - 1 % by weight inhibitors.
and
(4) 0.1 - 5 % by weight of an antimicrobial additive or a combination of at least two antimicrobial additives,
**characterized in that** the antimicrobial additives are silver nanoparticles or bioactive glass fillers having a composition of 45 ±5 % by weight SiO2, 25 ±5 % by weight Na2O, 25 ±5 % by weight CaO, and 5 ±5 % by weight P205 or combinations of the two antimicrobial additives.

2. A condensation-crosslinking silicone comprising a base component, which comprises
(1) polyorganosiloxanes containing two end-position hydroxyl groups in the molecule;
(2) polyorganosiloxanes containing no reactive groups and
(3) reinforcing fillers having a charged or uncharged surface;
(4) non-reinforcing fillers;
(5) oils and/or other softeners;
(6) other additives or customary addition agents, adjuvants or dyes;
(7) catalytically active additives;
(8) inhibitors;
and
(9) an antimicrobial additive or a combination of at least two antimicrobial additives and a curing component comprising:
(1) a catalyst for condensation crosslinking.
(2) hydrolyzable reactants
(3) a carrier substance
(4) other additives or customary addition agents, adjuvants or dyes, wherein the antimicrobial additives are silver nanoparticles or bioactive glass fillers having a composition of 45 ±5 % by weight Si02, 25 ±5 % by weight Na2O, 25 ±5 % by weight CaO, and 5 ±5 % by weight P205 or combinations of the two antimicrobial additives.

3. Silicone according to claim 2, **characterized in that** the catalyst for condensation crosslinking is an organotin compound.

4. Silicone according to claim 3, **characterized in that** the organotin compound is a dibutyl tin dilaurate or a dibutyl tin oxide.

5. Silicone according to anyone of claims 2 to 4, **characterized in that** the hydrolyzable reactants are silicic acid esters.

6. Silicone according to claims 5, **characterized in that** the silicic acid ester is a vinyl triethoxysilane or tetraethyl silicate.

7. Silicone according to anyone of claims 2 to 6, **characterized in that** the carrier mass is a mineral oil product.

8. Silicone according to claim 7, **characterized in that** the mineral oil product is vaseline.

9. Silicon paint for surface finishing of ear pieces made of silicone comprising:
(1) polyorganosiloxanes containing at least two unsaturated groups in the molecule;
(2) polyorganohydrogensiloxanes containing at least two SiH groups in the molecule;
(3) polyorganosiloxanes containing no reactive groups,
(4) a noble metal catalyst,
(5) reinforcing fillers having a charged or uncharged surface,
(6) inhibitors
(7) organic solvents
and
(8) an antimicrobial additive or a combination of at least two antimicrobial additives, wherein the antimicrobial additives are silver nanoparticles or bioactive glass fillers having a composition of 45 ±5 % by weight SiO2, 25 ±5 % by weight Na2O, 25 ±5 % by weight CaO, and 5 ±5 % by weight P205 or combinations of the two antimicrobial additives.

## Revendications

1. Silicone à deux composants, réticulée par addition, se composant de
(1) 0,1 - 70% en poids de polyorganosiloxanes avec au moins deux groupes insaturés dans la molécule,
(2) 0,1 - 15 % en poids de polyorganohydrogènesiloxanes comprenant au moins deux groupes SiH dans la molécule,
(3) 0 - 10 % en poids de polyorganosiloxanes sans groupes réactifs,
(4) 0,01 - 2 % en poids de catalyseur à base de métal noble,
(5) 0 - 30 % en poids de matières de charge renforçantes, avec une surface chargée ou non chargée,
(6) 0 - 20 % en poids de matières de charge non renforçantes,
(7) 0 - 30 % en poids d'huiles ou d'autres plastifiants,
(8) 0 - 10 % en poids d'autres additifs et adjuvants, matières auxiliaires et colorants courants,
(9) 0 - 1 % en poids d'inhibiteurs
et
(10) 0,1 - 5% en poids d'un additif antimicrobien ou d'une combinaison d'au moins deux additifs antimicrobiens,
**caractérisée en ce que** dans les cas des additifs antimicrobiens il s'agit de nanoparticules d'argent ou de charges de verre bioactives de la composition 45 ± 5 % en poids de SiO₂, 25 ± 5 % en poids de Na₂O, 25 ± 5 % en poids de CaO et 5 ± 5 % en poids de P₂O₅, ou de combinaisons des deux additifs antimicrobiens.

2. Silicone réticulant par condensation, constituée d'un composant de base se composant
(1) de polyorganosiloxanes avec deux groupes d'hydroxyle en fin de chaîne dans la molécule,
(2) de polyorganosiloxanes sans groupes réactifs,
(3) de matières de charge renforçantes, avec surface chargée ou non chargée,
(4) de matières de charge non renforçantes,
(5) d'huiles et/ou d'autres plastifiants,
(6) d'autres additifs et adjuvants, matières auxiliaires et colorants courants,
(7) d'additifs à action catalytique,
(8) d'inhibiteurs
et
(9) d'un additif antimicrobien ou d'une combinaison d'au moins deux additifs antimicrobiens,
et un composant de durcissement se composant
(1) d'un catalyseur pour la réticulation par condensation,
(2) de réactifs hydrolysables,
(3) d'une masse porteuse
(4) d'autres additifs et adjuvants, matières auxiliaires et colorants courants, les additifs antimicrobiens étant des nanoparticules d'argent ou des charges de verre bioactives de la composition 45 ± 5 % en poids de SiO₂, 25 ± 5 % en poids de Na₂O, 25 ± 5 % en poids de CaO et 5 ± 5 % en poids de P₂O₅ ou des combinaisons des deux additifs antimicrobiens.

3. Silicone selon la revendication 2,
**caractérisée en ce que** le catalyseur pour la réticulation par condensation est un composé organostannique.

4. Silicone selon la revendication 3,
**caractérisée en ce que** le composé organostannique est un dilaurate de dibutylétain ou un oxyde de dibutylétain,

5. Silicone selon l'une quelconque des revendications 2 à 4,
**caractérisée en ce que** les réactifs hydrolysables sont des esters d'acide silicique.

6. Silicone selon la revendication 5,
**caractérisée en ce que** l'ester d'acide silicique est un vinyltriéthoxysilane ou un silicate de tétraethyle.

7. Silicone selon l'une quelconque des revendications 2 à 6,
**caractérisée en ce que** la masse porteuse est un produit d'huile minérale.

8. Silicone selon la revendication 7,
**caractérisée en ce que** le produit d'huile minérale est de la vaseline.

9. Vernis silicone pour la finition de surfaces d'otoplastiques en silicone, se composant de :
(1) polyorganosiloxanes avec au moins deux groupes insaturés dans la molécule,
(2) polyorganohydrogènesiloxanes avec au moins deux groupes SiH dans la molécule,
(3) polyorganosiloxanes sans groupes réactifs,
(4) de catalyseur à base de métal noble,
(5) de matières de charge renforçantes, avec surface chargée ou non chargée,
(6) d'inhibiteurs,
(7) de solvant organique,
et
(8) d'un additif antimicrobien ou d'une combinaison d'au moins deux additifs antimicrobiens, les additifs antimicrobiens étant des nanoparticules d'argent ou des charges de verre bioactives de la composition 45 ± 5 % en poids de SiO₂, 25 ± 5 % en poids de Na₂O, 25 ± 5 % en poids de CaO et 5 ± 5 % en poids de P₂O₅ ou des combinaisons des deux additifs antimicrobiens.
